(19) Europäisches Patentamt
European Patent Office
Office européen des brevets

(11) Veröffentlichungsnummer: **0 113 845**
**A1**

(12) # EUROPÄISCHE PATENTANMELDUNG

(21) Anmeldenummer: **83112077.9**

(22) Anmeldetag: **01.12.83**

(51) Int. Cl.³: **C 08 G 18/72**, C 08 F 8/00, C 09 D 3/72, C 09 D 3/80

(30) Priorität: **08.12.82 DE 3245296**
**08.12.82 DE 3245295**
**08.12.82 DE 3245294**

(43) Veröffentlichungstag der Anmeldung: **25.07.84**
**Patentblatt 84/30**

(84) Benannte Vertragsstaaten: **AT BE CH DE FR GB LI NL**

(71) Anmelder: **BASF Aktiengesellschaft,**
**Carl-Bosch-Strasse 38, D-6700 Ludwigshafen (DE)**

(72) Erfinder: **Gimpel, Juergen, Dr., Osloer Weg,**
**D-6700 Ludwigshafen (DE)**
Erfinder: **Spoor, Herbert, Dr., Woogstrasse 44,**
**D-6703 Limburgerhof (DE)**
Erfinder: **Osterloh, Rolf, Dr., Am Wehrhaus 16 a,**
**D-6718 Gruenstadt (DE)**
Erfinder: **Sander, Hans, Dr., Petersstrasse 2,**
**D-6700 Ludwigshafen (DE)**

(54) **Verwendung eines Isocyanatgruppen enthaltenden Copolymerisats für Polyurethanlacke.**

(57) Die Erfindung betrifft die Verwendung eines Isocyanatgruppen enthaltenden Mischpolymerisats aus 5 bis 60 Gew.-% eines (N(1-alkenyl)isocyanats und 96 bis 40 Gew.-% mindestens eines (Meth-)acrylsäureesters, der teilweise durch weitere c opolymerisierbare olefinisch ungesättigte Verbindungen, die keine OH–, CH–, NH– oder SH–aciden Gruppen enthalten, ersetzt sein kann, das ein mittleres Molekulargewicht von 500 bis 10 000 aufweist, in Kombination mit entweder Hydroxylgruppen enthaltenden Polyacrylaten und/oder Polyestern oder niedermolekularen Di- und/oder Polyolen oder Wasser als Bindemittel für Polyurethanlacke sowie entsprechende Bindemittel. Diese Bindemittel eignen sich beispielsweise für Autoreparaturlacke.

EP 0 113 845 A1

Verwendung eines Isocyanatgruppen enthaltenden Copolymerisats für Polyurethanlacke

Die vorliegende Erfindung betrifft die Verwendung eines Isocyanatgruppen enthaltenden Copolymerisats in Kombination mit Hydroxylgruppen enthaltenden Verbindungen als Bindemittel für Polyurethanlacke, insbesondere für Autoreparaturlacke.

Copolymerisate, die Vinylisocyanat einpolymerisiert enthalten, und als Polyurethanlacke verwendet werden, sind bekannt. So beschreiben J.T.K. Woo und D.H. Heinert in Journal Coating Technology 49, No. 632, S. 82 ff. Polyurethanlacke auf Basis eines Vinylisocyanat/Vinylchlorid/Vinylacetatterpolymeren, eines Vinylchlorid/Vinylisocyanatcopolymeren, oder eines Vinylidenchlorid/Vinylchlorid/Vinylisocyanatterpolymeren, die mit Wasser oder Ethylenglykol vernetzt werden. Die Lichtbeständigkeit und die hydrolytische Beständigkeit dieser Polyurethanlacke ist aufgrund der gewählten Comonomeren Vinylchlorid, Vinylidenchlorid oder Vinylacetat unzureichend. Eine Verwendung derartiger Mischpolymerisate für Polyurethanlacke mit hoher Witterungsbeständigkeit und guter Hydrolysebeständigkeit kommt daher nicht in Frage. Insbesondere die Verwendung derartiger Mischpolymerisate als Bindemittel für Autoreparaturlacke ist wegen der genannten Mängel nicht möglich.

Als Polyisocyanate für hochwitterungsbeständige und hydrolysebeständige Polyurethanlacke werden meist Umsetzungsprodukte aus aliphatischen Diisocyanaten wie Isophorondiisocyanat oder Hexamethylendiisocyanat mit einem Unterschuß an Wasser oder Di-, Tri- und/oder Polyolen verwendet. Derartige Produkte enthalten jedoch noch immer etwas Diisocyanat, welches als Ausgangsprodukt verwendet wurde. Diese als Ausgangsprodukte verwendeten Diisocyanate sind toxikologisch sehr bedenklich.

Aufgabe der vorliegenden Erfindung ist es, die Verwendung eines Isocyanatgruppen enthaltenden Copolymerisats in Kombination mit Hydroxylgruppen enthaltenden Polyacrylaten und/oder Polyestern, niedermolekularen Di- und/oder Polyolen oder Wasser als Bindemittel für Polyurethanlacke aufzuzeigen, die eine hohe Witterungsbeständigkeit und eine gute Hydrolysebeständigkeit aufweisen.

Überraschenderweise gelang dies durch Verwendung von Isocyanatgruppen enthaltenden Copolymerisaten, die ein N(1-alkenyl)isocyanat als Comonomer einpolymerisiert enthalten.

Ls/ro

Gegenstand der vorliegenden Erfindung ist die Verwendung eines Isocyanatgruppen enthaltenden Copolymerisats aus

(I) 5 bis 60 Gew.-% eines N(1-alkenyl)isocyanats und
(II) 95 bis 40 Gew.-% mindestens eines Esters der Acrylsäure oder Methacrylsäure mit einem 1 bis 20 Kohlenstoffatome enthaltenden Monoalkohol, wobei bis zu 50 Gew.-% der Ester der Acrylsäure oder Methacrylsäure durch eine oder mehrere weitere, damit copolymerisierbare, von (I) verschiedene olefinisch ungesättigte Verbindungen, die keine OH-, CH-, NH- oder SH-aciden Gruppen enthalten, ersetzt sein können, mit der Maßgabe, daß die Summe der unter (I) und (II) genannten Prozentzahlen 100 ist und daß das Copolymerisat ein mittleres Molekulargewicht von 500 bis 10.000 aufweist, in Kombination mit entweder Hydroxylgruppen enthaltenden Polyacrylaten und/oder Polyestern, oder niedermolekularen Di- und/oder Polyolen oder Wasser, als Bindemittel für Polyurethanlacke.

Gegenstand der vorliegenden Erfindung sind auch Bindemittel für Polyurethanlacke, die aus einem Isocyanatgruppen enthaltenden Copolymerisat aus

(I) 5 bis 60 Gew.% eines N-(1-alkenyl)isocyanats und

(II) 95 bis 40 Gew.% mindestens eines Esters der Acrylsäure oder Methacrylsäure mit einem 1 bis 20 Kohlenstoffatome enthaltenden Monoalkohol, wobei bis zu 50 Gew.% der Ester oder Acrylsäure oder Methacrylsäure durch eine oder mehrere weitere, damit copolymerisierbare, von (I) verschiedene olefinisch ungesättigte Verbindungen, die keine OH-, CH-, NH- oder SH-aciden Gruppen enthalten, ersetzt sein können,

mit der Maßgabe, daß die Summe der unter (I) und (II) genannten Prozentzahlen 100 ist und das Copolymerisat ein mittleres Molekulargewicht von 500 bis 10.000 aufweist,
und
entweder Hydroxylgruppen enthaltenden Polyacrylaten und/oder Polyestern oder niedermolekularen Di- oder Polyolen mit der Maßgabe, daß das molare Verhältnis von NCO-Gehalt zu OH-Gehalt 0,8 bis 1,2 beträgt, erhalten worden sind.

Als Komponente (II) werden vorzugsweise Ester der Acryl- oder Methacrylsäure mit einem 1 bis 20 Kohlenstoffatome enthaltenden Monoalkohol verwendet.

Gegenstand der vorliegenden Erfindung ist auch die Verwendung dieser Copolymerisate in Kombination mit Hydroxylgruppen enthaltenden Polyacrylaten und/oder Polyestern, niedermolekularen Di- und/oder Polyolen oder Wasser als Bindemittel für Autoreparaturlacke.

Zu den Aufbaukomponenten der erfindungsgemäß zu verwendenden Isocyanatgruppen enthaltenden Copolymerisate ist im einzelnen folgendes auszuführen:

(I) Als N(1-alkenyl)isocyanat (I) können Isocyanate mit 2 bis 4 Kohlenstoffatomen in der Alkenylgruppe verwendet werden, wie Vinylisocyanat, Propenylisocyanat und Isopropenylisocyanat. Die Menge an einpolymerisiertem N(1-alkenyl)isocyanat beträgt 5 bis 60, vorzugsweise 10 bis 40 Gew.-%. Besonders bevorzugt sind Mischpolymerisate mit 15 bis 35 Gew.-% Vinyl-, Propenyl- oder Isopropenylisocyanat.

(II) Als Ester der Acrylsäure und Methacrylsäure mit 1 bis 20 Kohlenstoffatome enthaltenden Monoalkoholen können z.B. verwendet werden Methyl-, Ethyl-, Propyl-, Butyl-, 2-Ethylhexyl- oder Laurylacrylat oder -methacrylat, sowie Acrylsäure- und Methacrylsäureester mit 3 bis 20 Kohlenstoffatome enthaltenden Monoalkoholen, die Ether- oder Thioethergruppen enthalten wie z.B. Methylglykol(meth)acrylat oder Methyldiglykol(meth)acrylat. Diese Acrylsäure- oder Methacrylsäureester können bis zu 50 Gew.-% durch eine oder mehrere weitere, damit copolymerisierbare olefinisch ungesättigte Verbindungen, die keine OH-, CH-, NH- oder SH-acide Grupppen enthalten, ersetzt sein wie z.B. durch Acrylnitril, Methacrylnitril, Dihydrodicyclopentadienylacrylat, Vinylether wie Vinylmethylether, Vinylethylether, Vinylpropylether, Vinylisobutylether, Vinyl-2-ethylhexylether, Vinyloctadecylether, Vinylpropionat oder Vinylbenzoat, Maleinsäureanhydrid, Tetrahydrophthalsäureanhydrid, Diester der Maleinsäure, Itaconsäure, Citraconsäure oder Mesaconsäure mit gegebenenfalls Ether- oder Thioethergruppen enthaltenden Monoalkoholen mit 1 bis 20 Kohlenstoffatomen, wie z.B. Maleinsäuredimethylester, -diethylester, -dipropylester, -dibutylester, -di-2-ethylhexylester oder -dilaurylester, Crotonsäureester mit 1 bis 20 Kohlenstoffatome enthaltenden Monoalkoholen, wie Crotonsäuremethyl-, -ethyl-, propyl-, -butyl-, -2-ethylhexyl- oder -laurylester, heterocyclische N-Vinylverbindungen wie N-Vinyl-pyrrol, N-Vinylpyrrolidin, N-Vinylpyrrolidon, N-Vinyl-1,2,3,4-tetrahydrochinolin, N-Vinylpiperidin, N-Vinylcaprolactam, N-Vinylcarbazol, N-Vinylimidazol, N-Vinyl-2-methylimidazol, Vinylaromaten wie Styrol, p-tert.-Butylstyrol, Vinyltoluol, α-Methylstyrol, Monoolefine mit 3 bis 20 Kohlenstoffatomen wie

Propen, Buten, Penten, Hexen, Isobutylen und Diolefine wie Butadien und Isopren, sowie Acrylsäure- und Methacrylsäureester mit Monoalkoholen der allgemeinen Formel

$$HO-R^1-N{\diagup R^2 \atop \diagdown R^3}$$

worin
$R^1 = -C_nH_{2n}-$
$R^2, R^3 = -C_nH_{2n+1}$ und
n = 1 bis 20, vorzugsweise 1 bis 8 bedeutet,
wie z.B. Diethylaminoethylacrylat und Dimethylaminoethylacrylat, wobei diese Dialkylaminoalkyl(meth-)acrylate in Mengen von bis zu 20 Gew.-%, bezogen auf das Mischpolymerisat aus (I)+(II) einpolymerisiert sein können. Bevorzugt als Komponente (II) sind (Meth-)acrylsäureester. Es können auch Mischungen der genannten Monomeren verwendet werden. Die Menge an einpolymerisierbaren ethylenisch ungesättigten Verbindungen (II) beträgt 40 bis 95, vorzugsweise 60 bis 90 Gew.-%. Besonders bevorzugt sind Mischpolymerisate mit 65 bis 85 Gew.-% der genannten Acryl- und Methacrylsäureester.

Die Herstellung der Isocyanatgruppen enthaltenden Copolymerisate ist nicht Gegenstand der vorliegenden Erfindung und kann nach üblichen Methoden, beispielsweise durch radikalisch thermische Copolymerisation bzw. durch radikalische Redoxpolymerisation, wie z.B. in der deutschen Patentanmeldung P 32 45 298.5 beschrieben, oder durch radikalische photochemisch initiierte Copolymerisation, wie beispielsweise in der deutschen Patentanmeldung P 32 45 297.7 beschrieben, erfolgen.

Die erfindungsgemäß zu verwendenden Isocyanatgruppen enthaltenden Copolymerisate weisen mittlere Molekulargewichte $\bar{M}_n$ von 500 bis 10.000, vorzugsweise 3.000 bis 9.000 auf.

Als Hydroxylgruppen enthaltende Polyacrylate kommen solche in Frage, die als hydroxylgruppentragende Verbindungen einen Monoester der Acryl- oder Methacrylsäure mit einem 2 bis 30 Kohlenstoffatome enthaltenden Diol einpolymerisiert enthalten, der auch Ether- oder Thioethergruppen aufweisen kann, wie 2-Hydroxyethylacrylat, 2-Hydroxypropylacrylat, Butandiolmonoacrylat, 2-Hydroxyethylmethacrylat, 2-Hydroxypropylmethacrylat und 4-Hydroxybutylacrylat. Als hydroxylgruppenhaltiges Monomer kann auch Allylalkohol verwendet werden. Als weitere Comonomere des Hydroxylgruppen enthaltenden Polyacrylats kommen alle üblichen copolymerisierbaren z.B.

bei den Isocyanatgruppen enthaltenden Copolymerisaten unter (II) genannten olefinisch ungesättigten Verbindungen in Frage. Das Hydroxylgruppen enthaltende Copolymerisat enthält im allgemeinen 10 bis 50 Gew.-% Hydroxylgruppen tragende Monomere. Besonders bevorzugt sind Mischpolymerisate, die 15 bis 40 Gew.-% 2-Hydroxyethylacrylat, 2-Hydroxypropylacrylat, Butandiolmonoacrylat oder 2-Hydroxyethylmethacrylat und/oder 2-Hydroxypropylacrylat einpolymerisiert enthalten. Das mittlere Molekulargewicht des Hydroxylgruppen enthaltenden Polyacrylats beträgt im allgemeinen 500 bis 10.000.

Als Hydroxylgruppen enthaltende Polyester kommen solche Polyester in Frage, die mit einem molaren Überschuß an Hydroxylverbindung hergestellt worden sind. Derartige Polyesterharze können nach üblichen Verfahren aus Polycarbonsäuren oder deren veresterbaren Derivaten, wie z.B. Phthalsäure, Phthalsäureanhydrid, Isophthalsäure, Terephthalsäure, Dimethylterephthalsäure, Trimellitsäureanhydrid, Pyromellithsäuredianhydrid bzw. Adipinsäure und Polyhydroxyverbindungen wie Ethylenglykol, Propylenglykol, Butandiol, Hexandiol, Hydroxypivalinsäureneopentylglykolester, Dimethylolcyclohexan, Neopentylglykol, Trimethylolethan, Trimethylolpropan bzw. Glycerin hergestellt werden.

Als niedermolekulare Di- und Polyole können Alkandiole mit 2 bis 20 Kohlenstoffatomen in der Kohlenstoffkette wie Ethylenglykol, Propandiol-1,3, Butandiol-1,4, Neopentylglykol, Alkantriole wie Glycerin, Alkantetraole wie Erythrit oder Pentaerythrit, fünfwertige Alkohole wie Arabit, Adonit oder Xylit oder sechswertige Alkohole wie Sorbit, Mannit, Dulcit verwendet werden. Auch Polyetherdiole auf Basis Ethylenoxid oder Propylenoxid mit 4 bzw. 6 bis 20 bzw. 21 Kohlenstoffatomen können verwendet werden.

Als Di- oder Polyole können beispielsweise auch Hydroxypivalinsäureneopentylglykolester, Dimethylolcyclohexan, Trimethylolethan und Trimethylolpropan verwendet werden.

Bevorzugt sind Ethylenglykol, Butandiol-1,4, Neopentylglykol und Glycerin.

Die für die erfindungsgemäße Verwendung geeigneten Mengenverhältnisbereiche an Isocyanatgruppen enthaltendem Copolymerisat/OH-Gruppen enthaltendem Polyacrylat, OH-Gruppen enthaltendem Polyester, bzw. niedermolekularem Di- und/oder Polyol errechnen sich aus dem NCO- bzw. dem OH-Gehalt der Einsatzstoffe. Das molare Verhältnis NCO-Gehalt zu OH-Gehalt in der Lackmischung beträgt im allgemeinen 0,8 bis 1,2, vorzugsweise 1,0.

Sofern Wasser als Vernetzer verwendet wird, wird dieses in Mengen von bis zu 5 Gew.% bzw. in organischen Lösungsmitteln, Hilfsstoffen oder in der Luft vorhandenes Wasser (Feuchtigkeit) eingesetzt.

Die Verarbeitung der Bindemittel erfolgt analog zu den in H. Kittel, Lehrbuch der Lacke und Beschichtungen I, 2, S. 512 ff beschriebenen Verfahrensweisen zur Herstellung von Polyurethanlacken.

Die erfindungsgemäßen Polyurethanlacke können auch Hilfsstoffe wie anorganische Pigmente und Füllstoffe, wie z.B. Titandioxid, Talkum, Schwerspat und Eisenoxid je nach Anwendungszweck in Mengen von 20 bis 200, vorzugsweise 50 bis 100 Gew.-Teilen, bezogen auf 100 Gew.-Teile Bindemittel, enthalten. Darüber hinaus können organische Buntpigmente oder Ruß in Mengen von bis zu 5 Gew.-Teilen enthalten sein. Oberflächenaktive Mittel können bis zu 0,5 Gew.-Teilen und hochsiedende Lösungsmittel bis zu 10 Gew.-Teilen, Wachse zur Erhöhung der Kratzfestigkeit bis zu 2 Gew.-Teilen und Katalysatoren wie Amine bis zu 1 Gew.-Teil, oder wie metallorganische Verbindungen, wie Dibutylzinndilaurat bis zu 0,5 Gew.-Teilen, jeweils bezogen auf 100 Teile Bindemittel, vorhanden sein.

Mit den erfindungsgemäßen Polyurethanlacken erhält man lichtechte und hochglänzende Lackfilme mit guten mechanischen Eigenschaften, wie einer hohen Pendelhärte, einer guten Elastizität, guter Zähigkeit und Abriebfestigkeit, sowie guten elektrischen Eigenschaften, einer guten Chemikalienbeständigkeit und einer guten Hydrolysebeständigkeit. Die lacktechnischen Eigenschaften können durch die Wahl der Comonomeren bei der Polymerisation nach Wunsch modifiziert und damit auf den jeweiligen Verwendungszweck abgestimmt werden.

Die in den Beispielen angegebenen Teile und Prozente sind, soweit nicht anders angegeben, Gewichtsteile und Gewichtsprozente.

## I. Herstellung der Copolymerisate

Copolymerisat 1

Zu einer Vorlage aus 241,6 Teilen Toluol werden bei 75°C unter Stickstoff eine Mischung aus 20 Teilen Vinylisocyanat, 30 Teilen Toluol, 90 Teilen t-Butylacrylat, 90 Teilen Butylacrylat und 4 Teilen Diisopropylxanthogendisulfid innerhalb einer Stunde und eine Lösung von 8 Teilen Azobisisobutyronitril in 34,2 Teilen Aceton innerhalb von 3 Stunden gleichmäßig zudosiert. Es wird eine Stunde bei 75°C nachpolymerisiert. Dann gibt man

1 Teil Azobisisobutyronitril hinzu und polymerisiert eine Stunde bei 75°C nach. Der Umsatz beträgt 100 %. Es wird im Vakuum aufkonzentriert. Man erhält so eine 59,7%ige klare Lösung eines Copolymerisats, das einen NCO-Wert von 4,9 % und einen K-Wert nach Fikentscher von 19,8 aufweist.

Copolymerisat 2

Zu einer Vorlage aus 312 Teilen Toluol werden bei 75°C unter Stickstoff eine Mischung aus 60 Teilen Vinylisocyanat, 120 Teilen Butylacrylat, 120 Teilen t-Butylacrylat, 6 Teilen Diisopropylxanthogendisulfid und 86,3 Teilen Toluol innerhalb einer Stunde und eine Lösung von 12 Teilen Azobisisobutyronitril in 51,6 Teilen Aceton innerhalb von 3 Stunden gleichmäßig zudosiert. Es wird eine Stunde bei 75°C nachpolymerisiert, man gibt 1,5 Teile Azobisisobutyronitril hinzu und polymerisiert noch eine Stunde bei 75°C nach. Der Umsatz beträgt 100 %. Es wird im Vakuum aufkonzentriert. Man erhält so eine 60,7%ige klare Lösung eines Copolymerisats, das einen NCO-Wert von 8,9 % und einen K-Wert nach Fikentscher von 19 aufweist.

Copolymerisat 3

Zu einer Vorlage aus 300 Teilen Toluol werden bei 75°C unter Stickstoff eine Mischung aus 90 Teilen Vinylisocyanat, 105 Teilen t-Butylacrylat, 105 Teilen Butylacrylat und 90 Teilen Ethylglykolacetat innerhalb einer Stunde und eine Lösung aus 12 Teilen Azobisisobutyronitril und 60 Teilen Aceton innerhalb von 3 Stunden gleichmäßig zudosiert. Es wird eine Stunde bei 75°C nachpolymerisiert. Der Umsatz beträgt 100 %. Es wird im Vakuum aufkonzentriert. Man erhält eine 60,1%ige klare Lösung eines Copolymerisats, das einen NCO-Wert von 16,0 % und einen K-Wert nach Fikentscher von 32,4 aufweist.

Copolymerisat 4

Zu einer Vorlage aus 133,8 Teilen Toluol werden bei 75°C unter Stickstoff eine Mischung aus 80 Teilen Vinylisocyanat, 60 Teilen t-Butylacrylat, 60 Teilen Butylacrylat, 4 Teilen Diisopropylxanthogendisulfid und 120 Teilen Toluol innerhalb einer Stunde und eine Lösung aus 8 Teilen Azobisisobutyronitril und 34,2 Teilen Aceton innerhalb von 3 Stunden gleichmäßig zudosiert. Dann wird fünfmal im Abstand von einer Stunde 1 Teil Azobisisobutyronitril zugegeben. Anschließend wird eine Stunde bei 75°C nachpolymerisiert. Der Umsatz beträgt 99,7 %. Dann wird im Vakuum

aufkonzentriert. Man erhält eine 58,9%ige klare Lösung eines Copolymerisats, das einen NCO-Wert von 18,0 % und einen K-Wert nach Fikentscher von 17,6 aufweist.

Copolymerisat 5

Zu einer Vorlage aus 319 Teilen Toluol werden bei 60°C unter Stickstoff eine Mischung aus 60 Teilen Vinylisocyanat, 150 Teilen Methylmethacrylat, 90 Teilen 2-Ethylhexylacrylat, 6 Teilen Diisopropylxanthogendisulfid und 79,5 Teilen Toluol innerhalb einer Stunde und eine Mischung aus 12 Teilen t-Butylcyclohexylperoxidicarbonat und 51,6 Teilen Toluol innerhalb von 3 Stunden gleichmäßig zudosiert. Danach werden zweimal im Abstand von einer Stunde 1,5 Teile t-Butylcyclohexylperoxidicarbonat zudosiert. Es wird eine Stunde bei 60°C nachpolymerisiert. Der Umsatz beträgt 98 %. Dann wird im Vakuum aufkonzentriert. Man erhält eine 59,8%ige klare Lösung eines Copolymerisats, das einen NCO-Wert von 8,7 % und einen K-Wert nach Fikentscher von 17,6 aufweist.

Copolymerisat 6

Zu einer Vorlage aus 287 Teilen Toluol werden bei 60°C unter Stickstoff eine Mischung aus 60 Teilen Vinylisocyanat, 120 Teilen Butylacrylat, 120 Teilen Methylmethacrylat, 6 Teilen Diisopropylxanthogendisulfid und 111,4 Teilen Ethylglykolacetat innerhalb einer Stunde und eine Mischung aus 12 Teilen 2,2'-Azobis-(2,4-dimethylvaleronitril) und 51,6 Teilen Aceton innerhalb von 3 Stunden gleichmäßig zudosiert. Danach werden dreimal im Abstand von einer Stunde 1,5 Teile 2,2'-Azobis-(2,4-dimethylvaleronitril) zudosiert. Es wird eine Stunde bei 60°C nachpolymerisiert. Der Umsatz beträgt 100 %. Dann wird im Vakuum aufkonzentriert. Man erhält eine 60%ige klare Lösung eines Copolymerisats, das einen NCO-Wert von 9,6 % und einen K-Wert nach Fikentscher von 18,4 aufweist.

<u>II. Lacke</u> (erfindungsgemäße Verwendung)

Die Copolymerisate 1 bis 6 wurden in Kombination mit

a) einem OH-Polyester auf Basis von
21,6 Teilen Phthalsäureanhydrid,
8,2 Teilen Adipinsäure,
1,4 Teilen Maleinsäureanhydrid,
17,9 Teilen 2-Ethylhexansäure und
34,6 Teilen Trimethylolpropan
(OH-Zahl: 165)

b) einem OH-Polyacrylat auf Basis von
35 Teilen 2-Hydroxypropylacrylat,
55 Teilen t-Butylacrylat und
10 Teilen n-Butylacrylat
(OH-Zahl: 150)

als Polyurethanlacke geprüft.

Die Mischungsverhältnisse und die Lackeigenschaften sind in der folgenden Tabelle 1 aufgeführt.

Tabelle 1

| Copolymerisat Nr. | Vernetzer | Mischungsverhältnis Copolymerisat/Vernetzer in Gew.Teilen | Einbrennbed. min/°C | Schichtdicke µm | Pendelhärte 1) sec | Erichsentiefung 2) mm | Gitterschnitt 3) |
|---|---|---|---|---|---|---|---|
| 1 | Polyester a) | 17,5/5 | 30/150 | 45 | 40 | 10 | 0 |
| 1 | Polyacrylat b) | 17,5/5 | 30/150 | 35 | 40 | 10 | 0 |
| 2 | Polyester a) | 9,2/5 | 30/150 | 40 | 90 | 9,5 | 0 |
| 2 | Polyacrylat b) | 9,5/5 | 30/150 | 40 | 110 | 8,5 | 0 |
| 3 | Polyester a) | 6,3/5 | 30/150 | 30 | 164 | 8,1 | 0 |
| 3 | Polyester a) | 6,5/5 | 30/150 | 32 | 172 | 6,0 | 0 |
| 4 | Polyester a) | 10,7/10 | 30/150 | 40 | 134 | 8,1 | 0 |
| 4 | Polyacrylat b) | 11,1/10 | 30/150 | 42 | 160 | 6,4 | 1 |
| 5 | Polyester a) | 10/15,4 | 30/150 | 49 | 122 | 9,6 | 0 |
| 5 | Polyacrylat b) | 10/10,8 | 30/150 | 56 | 155 | 8,6 | 1 |
| 6 | Polyester a) | 10/15,4 | 30/150 | 51 | 160 | 8,6 | 1 |
| 6 | Polyacrylat b) | 10/10,8 | 30/150 | 56 | 164 | 9,6 | 1 |

1) DIN 53 157 2) DIN 53 156 3) DIN 53 151

Die Copolymerisate 3 bis 6 wurden in Kombination mit Wasser als feuchtigkeitshärtende Polyurethanlacke geprüft.

Die Mischungsverhältnisse und die Lackeigenschaften sind in der folgenden Tabelle 2 aufgeführt.

Tabelle 2

| Copolymerisat Nr. | Mischungsverhältnis Copolymerisat/Wasser in Gew.Teilen | Einbrennbed. min/°C | Schichtdicke µm | Pendelhärte 1) sec | Erichsentiefung 2) mm | Gitterschnitt 3) |
|---|---|---|---|---|---|---|
| 3 | 20/1 | 30/150 | 30 | 70 | 10 | 0 |
| 4 | 40/1,5 | 30/150 | 40 | 122 | 8,3 | 1 |
| 5 | 40/1,5 | 30/150 | 52 | 143 | 9,0 | 1 |
| 6 | 40/1,5 | 30/150 | 44 | 122 | 2,3 | 1 |

1) DIN 53 157 2) DIN 53 156 3) DIN 53 151

Copolymerisat 7

Zu einer Vorlage aus 317,2 Teilen Toluol werden bei 75°C unter Stickstoff eine Mischung aus 75 Teilen Vinylisocyanat, 135 Teilen Methylmethacrylat, 30 Teilen 2-Ethylhexylacrylat, 6 Teilen Diisopropylxanthogendisulfid und 81 Teilen Toluol innerhalb einer Stunde und eine Lösung von 12 Teilen Azobisisobutyronitril in 51,6 Teilen Aceton innerhalb von 3 Stunden gleichmäßig zudosiert. Es wird eine Stunde bei 75°C nachpolymerisiert, dann werden dreimal mit stündlichem Abstand 1,5 Teile Azobisisobutyronitril zugegeben. Es wird nochmals eine Stunde bei 75°C nachpolymerisiert und anschließend unter Vakuum aufkonzentriert. Man erhält eine klare Lösung eines Copolymerisats mit einem Feststoffgehalt von 59,3 %. Das Copolymerisat weist einen NCO-Wert von 10,1 % und einen K-Wert nach Fikentscher von 18,2 auf.

Copolymerisat 8

Zu einer Volage aus 333,5 Teilen Toluol werden bei 75°C unter Stickstoff eine Mischung aus 60 Teilen Vinylisocyanat, 120 Teilen Methylmethacrylat, 120 Teilen 2-Ethylhexylacrylat, 6 Teilen Diisopropylxanthogendisulfid und 65 Teilen Toluol innerhalb einer Stunde und eine Lösung von 12 Teilen Azobisisobutyronitril in 51,6 Teilen Aceton innerhalb 3 Stunden gleichmäßig zudosiert. Es wird eine Stunde bei 75°C nachpolymerisiert, dann werden dreimal mit stündlichem Abstand 1,5 Teile Azobisisobutyronitril zugegeben. Es wird nochmals eine Stunde bei 75°C nachpolymerisiert und anschließend unter Vakuum aufkonzentriert. Man erhält eine klare Lösung eines Copolymerisats mit einem Feststoffgehalt von 60,1 %. Das Copolymerisat weist einen NCO-Wert von 6,2 % und einen K-Wert von 16,9 auf.

erfindungsgemäße Verwendung:

Die Copolymerisate 7 und 8 wurden in Kombination mit Butandiol-1,2 und 1,2-Propylenglykol als Polyurethanlacke geprüft.

Die Mischungsverhältnisse und die Lackeigenschaften sind in der folgenden Tabelle 3 aufgeführt.

Tabelle 3

| Copolymerisat Nr. | Vernetzer | Mischungsverhältnis Copolymerisat/Vernetzer in Gew.% | Einbrennbed. [min/°C] | Schichtdicke [µm] | Pendelhärte[1] [sec] | Erichsentiefung[2] [mm] | Gitterschnitt[3] |
|---|---|---|---|---|---|---|---|
| 7 | Butandiol | 20/1,3 | 30/150 | 33 | 168 | 8,0 | 1-2 |
| 7 | 1,2-Propylenglykol | 20/1,1 | 30/150 | 30 | 158 | 7,9 | 1-2 |
| 8 | Butandiol | 20/0,8 | 30/150 | 30 | 102 | 9,9 | 2 |
| 8 | 1,2-Propylenglykol | 20/0,7 | 30/150 | 32 | 100 | 9,5 | 2 |

1) DIN 53 157
2) DIN 53 156
3) DIN 53 151

Patentansprüche

1. Verwendung eines Isocyanatgruppen enthaltenden Copolymerisats aus

(I) 5 bis 60 Gew.-% eines N(1-alkenyl)isocyanats und

(II) 95 bis 40 Gew.-% mindestens eines Esters der Acrylsäure oder Methacrylsäure mit einem 1 bis 20 Kohlenstoffatome enthaltenden Monoalkohol, wobei bis zu 50 Gew.-% der Ester der Acrylsäure oder Methacrylsäure durch eine oder mehrere weitere, damit copolymerisierbare, von (I) verschiedene olefinisch ungesättigte Verbindungen, die keine OH-, CH-, NH- oder SH-aciden Gruppen enthalten, ersetzt sein können,

mit der Maßgabe, daß die Summe der unter (I) und (II) genannten Prozentzahlen 100 ist und das Copolymerisat ein mittleres Molekulargewicht von 500 bis 10.000 aufweist,
in Kombination mit entweder Hydroxylgruppen enthaltenden Polyacrylaten und/oder Polyestern
oder niedermolekularen Di- und/oder Polyolen
oder Wasser,

als Bindemittel für Polyurethanlacke.

2. Verwendung nach Anspruch 1 als Bindemittel für Autoreparaturlacke.

3. Verwendung nach Anspruch 1 oder 2, <u>dadurch gekennzeichnet</u>, daß das Isocyanatgruppen enthaltende Copolymerisat als N-(1-alkenyl)-isocyanat (I) Vinylisocyanat, Propenylisocyanat und/oder Isopropenylisocyanat einpolymerisiert enthält.

4. Bindemittel für Polyurethanlacke, <u>dadurch gekennzeichnet</u>, daß sie aus einem Isocyanatgruppen enthaltenden Copolymerisat aus

(I) 5 bis 60 Gew.% eines N-(1-alkenyl)-isocyanats und

(II) 95 bis 40 Gew.% mindestens eines Esters der Acrylsäure oder Methacrylsäure mit einem 1 bis 20 Kohlenstoffatome enthaltenden Monoalkohol, wobei bis zu 50 Gew.% der Ester der Acrylsäure oder Methacrylsäure durch eine oder mehrere weitere, damit copolymerisierbare, von (I) verschiedene olefinisch ungesättigte Verbindungen, die keine OH-, CH-, NH- oder SH-aciden Gruppen enthalten, ersetzt sein können,

mit der Maßgabe, daß die Summe der unter (I) und (II) genannten Prozentzahlen 100 ist und das Copolymerisat ein mittleres Molekulargewicht von 500 bis 10.000 aufweist,
und
entweder Hydroxylgruppen enthaltenden Polyacrylaten und/oder Polyestern, oder niedermolekularen Di- und/oder Polyolen mit der Maßgabe, daß das molare Verhältnis von NCO-Gehalt zu OH-Gehalt 0,8 bis 1,2 beträgt, erhalten worden sind.

5. Bindemittel für Polyurethanlacke nach Anspruch 4, dadurch gekennzeichnet, daß ein Isocyanatgruppen enthaltendes Copolymerisat verwendet wird, das als N-(1-alkenyl)-isocyanat (I) Vinylisocyanat, Propenylisocyanat oder Isopropenylisocyanat einpolymerisiert enthält.

Europäisches Patentamt

**EUROPÄISCHER RECHERCHENBERICHT**

0113845

Nummer der Anmeldung

EP 83 11 2077

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| X | US-A-2 326 287 (D.D. COFFMAN) * Seite 3, Ansprüche 1,11 und 12; Seite 2, rechte Spalte, Zeile 74 - Seite 3, linke Spalte, Zeile 16; Beispiele 2 und 3 * --- | 1,3-5 | C 08 G 18/72<br>C 08 F 8/00<br>C 09 D 3/72<br>C 09 D 3/80 |
| Y | GB-A-1 013 446 (DU PONT) * Seiten 5 und 6; Ansprüche 7,8,11 und 16 bis 18; Seite 3, Zeilen 1-32; Seite 3, Beispiel 4; Seite 4, Zeilen 103-116; Seite 5, Zeilen 32-49 * --- | 1,3-5 | |
| Y | FR-A-2 450 264 (DU PONT) * Seiten 11 und 12; Ansprüche 1,5,8 und 9; Seite 4, Zeilen 11-23 * --- | 1,4 | |
| | | | RECHERCHIERTE SACHGEBIETE (Int. Cl. 3) |
| Y | GB-A-1 019 926 (DU PONT) * Seite 3, Ansprüche 1 und 7 bis 9; Seite 1, Zeile 77 - Seite 2, Zeile 51 * ----- | 1,4 | C 08 G<br>C 08 F |

Der vorliegende Recherchenbericht wurde für alle Patentansprüche erstellt.

| Recherchenort | Abschlußdatum der Recherche | Prüfer |
|---|---|---|
| DEN HAAG | 27-03-1984 | VAN PUYMBROECK M.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82